# EUROPÄISCHE PATENTSCHRIFT

(11) **EP 1 208 956 B1**
(45) Veröffentlichungstag und Bekanntmachung des Hinweises auf die Patenterteilung: **28.12.2005**
(21) Anmeldenummer: 00125745.0
(22) Anmeldetag: 24.11.2000
(51) Int. Cl.: B29C 47/68, B29C 47/50, B29C 47/92

(54) **Verfahren zur Steuerung eines Extrusionssystems und Vorrichtung zur Durchführung des Verfahrens**
Method and apparatus for controlling an extrusion system
Procédé et dispositif pour régler une ligne d'extrusion

(43) Veröffentlichungstag der Anmeldung: 29.05.2002
(73) Patentinhaber: Maag Pump Systems Textron AG, 8154 Oberglatt (CH)
(72) Erfinder: Emhard, Peter, 34134 Kassel (DE); Sauter, Martin, 8425 Oberembrach (CH); Heinen, Michael, 8049 Zürich (CH)
(74) Vertreter: Troesch Scheidegger Werner AG

(56) Entgegenhaltungen:
- EP-A- 0 492 425
- DE-U- 9 004 535
- US-A- 4 721 589
- US-A- 4 832 882
- US-A- 4 944 903
- PATENT ABSTRACTS OF JAPAN vol. 1996, no. 10, 31. Oktober 1996 (1996-10-31) -& JP 08 156072 A (TANAKA KAZUYUKI), 18. Juni 1996 (1996-06-18) -& DATABASE WPI Derwent Publications Ltd., London, GB; AN 1996-337891 XP002166130

## Beschreibung

Die vorliegende Erfindung betrifft ein Verfahren nach dem Oberbegriff des Patentanspruchs 1 sowie eine Vorrichtung, insbesondere zur Durchführung des Verfahrens.

Ein Verfahren bzw. eine Vorrichtung solcher Art werden in US-4 944 903 and DE-U-9 004 535 beschrieben.

Kunststoffe werden unter anderem in Extrusionslinien verarbeitet, wobei Extrusionssysteme zum Einsatz kommen, mit Hilfe derer ein nachgeschaltetes Werkzeug kontinuierlich und gleichförmig mit Kunststoffschmelze versorgt wird. Sind die zu verarbeitenden Ausgangsmaterialien verschmutzt - zum Beispiel wegen Wiederverwendung (Recycling) - und/oder werden hohe Anforderungen an die Reinheit der Schmelze (z. B. bei der Folienherstellung) gestellt, besteht der Aufbau des Extrusionssystems vorzugsweise - in Förderrichtung der Schmelze gesehen - aus einem Schneckenextruder, einem Filter und einer Zahnradpumpe. An der Zahnradpumpe wird das jeweils benötigte Werkzeug angeschlossen. Der Filter wird eingesetzt, um die Zahnradpumpe und das Extrusionswerkzeug vor Beschädigungen durch grössere, in der Schmelze enthaltene Fremdpartikel zu schützen und/oder die erforderliche Schmelzequalität zu erreichen.

Durch die Installation einer Zahnradpumpe an einen Plastifizierextruder ergibt sich eine Trennung der Verfahrensschritte Plastifizieren und Austragen. Dies eröffnet die Chance, durch eine gezielte Optimierung beider Verfahrensschritte und Aggregate zu einem insgesamt verbesserten Plastifiziersystem zu kommen. Nach wie vor erfüllt der Plastifizierextruder die Funktionen des Feststofförderns, des Plastifizierens und auch des Mischens und Homogenisierens. Er leistet auch einen gewissen Druckaufbau, nämlich insbesondere um die Zahnradpumpe sicher zu füllen. Die Funktion des gleichmässigen Austragens gegen den Widerstand nachgeschalteter "Druckverbraucher" - wie Leitungen, Filter und Extrusionswerkzeug - übernimmt die Extrusionszahnradpumpe.

Der Durchsatz von Extruder und Zahnradpumpe muss präzise aufeinander abgestimmt werden. Fördert der Extruder weniger, als die Zahnradpumpe austrägt, so würde diese nur teilgefüllt. Fördert umgekehrt der Extruder nur geringfügig zuviel, so würde der Vordruck auf sehr hohe Werte steigen. Es wird deshalb eine Druck-Drehzahl-Regelung eingesetzt, bei welcher der Druck vor der Pumpe als Indikator für die Abstimmung des Durchsatzverhaltens beider Aggregate dient. Der Vordruck wird in einem Regelkreis geregelt, wobei die Extruderdrehzahl die Stellgrösse ist. Durch Konstanthalten der Pumpendrehzahl wird ein konstanter Volumendurchsatz angestrebt.

Diese bekannte Druck-Drehzahl-Regelung weist jedoch den Nachteil auf, dass eine Verschmutzung des Filters zu einer Erhöhung des Druckes vor dem Filter führt, und zwar deshalb, weil zur Konstanthaltung des Druckes auf der Saugseite der Zahnradpumpe die Drehzahl des Schneckenextruders erhöht werden muss. Als Folge davon wird die Rückstaulänge im Extruder erhöht, womit das Fördermedium im Extruder einer erhöhten Belastung ausgesetzt wird, die nicht nur zu einer Veränderung des Fördermediums sondern vor allem auch zu dadurch resultierenden Eigenschaftsänderungen des Endproduktes (Extrudates, z. B. Folien, Platten, Rohre, etc.), z. B. durch Vernetzen oder durch Degradation, führen kann.

Der vorliegenden Erfindung liegt daher die Aufgabe zugrunde, ein Verfahren anzugeben, das die vorstehend genannten Nachteile nicht aufweist.

Diese Aufgabe wird durch die im kennzeichnenden Teil des Patentanspruchs 1 angegebenen Massnahmen gelöst. Vorteilhafte Ausgestaltungen der Erfindung sowie eine Vorrichtung, insbesondere zur Durchführung des Verfahrens, sind in weiteren Ansprüchen angegeben.

Die Erfindung weist die folgenden Vorteile auf: Indem ein durch eine Verschmutzung des Filterelementes erzeugter Druckanstieg nicht durch Erhöhen der Extruderdrehzahl, und damit einhergehender sich ändernder Rückstaulänge und den daraus resultierenden Eigenschaftsänderungen des Fördermediums, kompensiert wird, sondern indem der Filtereinlaufdruck konstant gehalten wird, senkt sich der Pumpeneinlaufdruck in gleichem (ähnlichem) Masse, da der Gesamtdurchsatz des Extrusionssystems konstant gehalten wird. Damit wird das Fördermedium einer verminderten Belastung ausgesetzt.

Die sich daraus resultierende Leckstromsituation in der Pumpe wird durch eine geringfügige Erhöhung der Drehzahl der Zahnradpumpe ausgeglichen, die exakt so gross sein muss, dass dies nicht zu einer Gesamtdurchsatzänderung führt.

Erfindungsgemäss wird also der Einlaufdruck der Zahnradpumpe in gewissen Grenzen variiert, wobei gleichzeitig die Drehzahl, der Druck am Ausgang und die Rückstaulänge des Extruders unverändert belassen werden. So wird eine erhöhte Belastung des Fördermediums vermieden. Der sich ändernde Differenzdruck über der Zahnradpumpe und der dadurch geringfügig unterschiedliche Durchsatz wird durch die Drehzahländerung aufgefangen.

Die Erfindung wird nachfolgend anhand von Zeichnungen beispielsweise näher erläutert. Dabei zeigen
- Fig. 1: eine schematischer Darstellung eines bekannten Extrusionssystems mit bekannter Regelung,
- Fig. 2: einen Druckverlauf im Extrusionssystem gemäss Fig. 1 bei Verwendung der bekannten Regelung,
- Fig. 3: ein erfindungsgemässes Extrusionssystem mit erfindungsgemässer Regelung,
- Fig. 4: einen Druckverlauf im Extrusionssystem gemäss Fig. 3 bei Verwendung einer erfindungsgemässen Regelung und
- Fig. 5: eine weitere Ausführungvariante eines erfindungsgemässen Extrusionssystems.

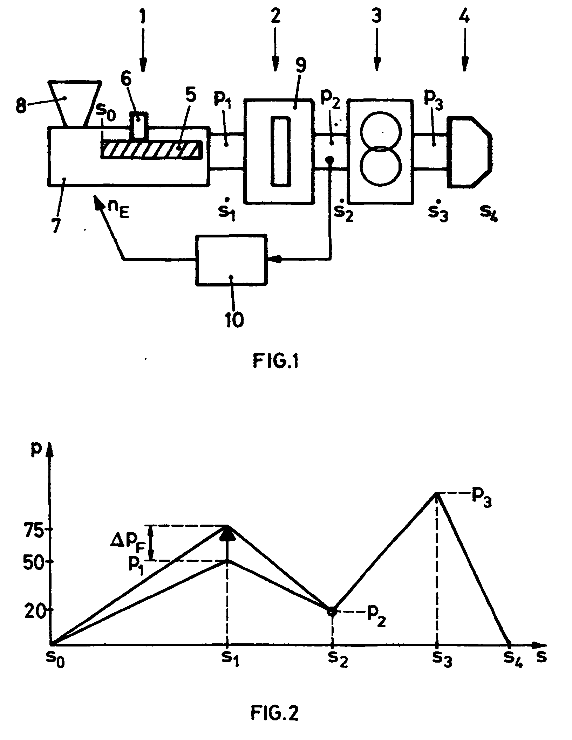

In Fig. 1 ist ein an sich bekanntes Extrusionssystem dargestellt, das aus einer Zuführvorrichtung 1, einem Filterelement 2, einer Fördervorrichtung 3 und einem Werkzeug 4 besteht. Als Zuführvorrichtung 1 kommen beispielsweise ein Schneckenextruder oder eine aus zwei Walzen bestehende Einzugsvorrichtung, wie sie beispielsweise aus der EP-0 897 063 bekannt ist, in Frage. Mit 1 ist in Fig. 1 ein Schneckenextruder schematisch dargestellt, der eine in einem Gehäuse 7 enthaltene Schnecke 5 aufweist, mit der Fördermedium in Richtung Filterelement 2 gefördert wird. Je nach den Eigenschaften des Fördermediums ist eine Entgasungsvorrichtung 6 im Schheckenzylinder vorzusehen. Des weiteren ist eine Füllvorrichtung in Form eines Trichters 8 vorhanden, über den das noch zu plastifizierende Fördermedium, das beispielsweise zu Beginn des Extrusionsprozesses aus einem Granulat besteht, der Schnecke 5 zugeführt wird.

Das in Förderrichtung nach der Zuführvorrichtung 1 angeordnete Filterelement 2 besteht aus einem Gehäuse 9, in dem mindestens ein Filter, beispielsweise ein Grob- und/oder ein Feinfilter, angeordnet ist.

Wiederum in Förderrichtung gesehen, und zwar nach dem Filterelement 2 angeordnet, ist die Fördervorrichtung 3 vorgesehen, die vorzugsweise als Zahnradpumpe realisiert ist.

Wie bereits in der Einleitung erwähnt worden ist, zeichnet sich die bekannte Regelung dadurch aus, dass der Fülldruck p₂ vor der Zahnradpumpe 3 auf einem konstanten Wert gehalten wird. Damit dies auch bei zunehmender Verschmutzung des Filterelementes 2 bewerkstelligt werden kann, wird der Druck p₁ vor dem Filter entsprechend dem Verschmutzungsgrad erhöht, indem die Drehzahl n_{E} der Zufördervorrichtung 1, d.h. des Schneckenextruders, entsprechend erhöht wird. Hierzu wird mit Hilfe eines Drucksensors (in Fig. 1 nicht dargestellt) der Druck p₂ gemessen und einer Regeleinheit 10 zugeführt, in der ein Stellsignal entsprechend der erforderlichen Drehzahl n_{E} der Zuführvorrichtung 1 erzeugt wird.

Fig. 2 zeigt den prinzipiellen Druckverlauf in Funktion vom Ort s entlang des bekannten Extrusionssystems gemäss Fig. 1.

Zunächst wird in der Zuführvorrichtung 1 ein Druck p₁ aufgebaut (Ort s₁). Das Fördermedium wird in der Folge durch das Filterelement 2 gepresst. Entsprechend ist der Druck p₂ am Ausgang des Filterelementes 2 tiefer (Ort s₂) als der Druck p₁. Schliesslich wird mit Hilfe der Fördervorrichtung 3 der erforderliche konstante Durchsatz für das Werkzeug 4 erzeugt (Ort s₃). Gemäss dem bereits erläuterten, bekannten Regelvorgang wird der Fülldruck p₂ für die Fördervorrichtung 3 auf einem konstanten Wert gehalten. Dies auch dann, wenn in Folge eines zunehmend verschmutzten Filterelementes 2 der Druck p₂ an und für sich abfallen würde. Ein Druckabfall des Druckes p₂ wird verhindert, indem der Druck p₁ um Δp_{F} (= Druckabfall über dem Filterelement 2) erhöht wird. Dies wird - mit allen für das Fördermedium resultierenden Nachteilen - dadurch erreicht, indem die Drehzahl n_{E} der Zufördervorrichtung 1 entsprechend erhöht wird.

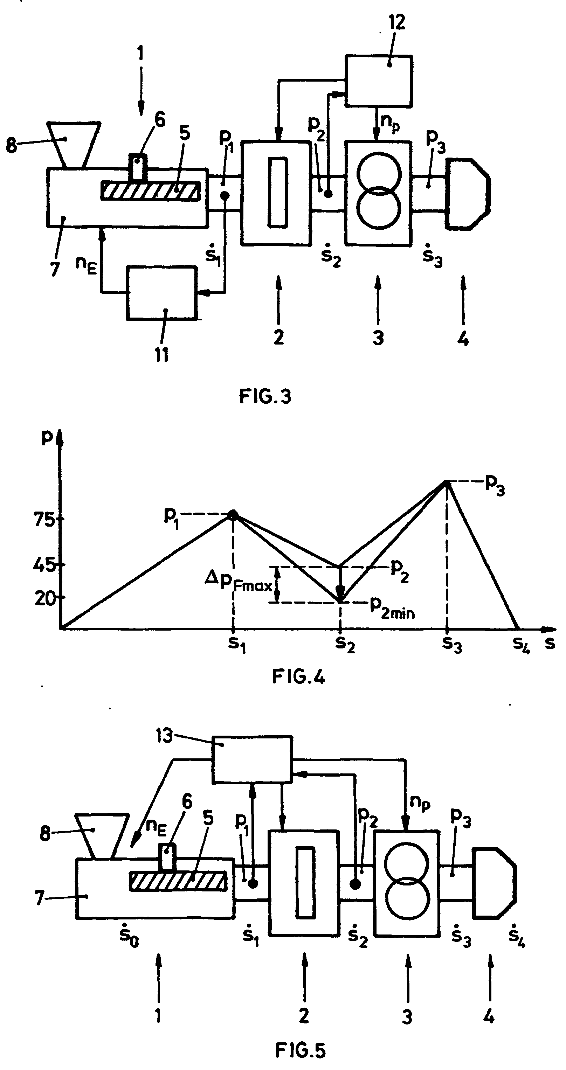

In Fig. 3 ist ein erfindungsgemässes Extrusionssystem dargestellt, das wiederum, in Förderrichtung der Schmelze gesehen, aus einer Zuführvorrichtung 1, einem Filterelement 2, einer Fördervorrichtung 3 und einem Werkzeug 4 besteht. Des weiteren ist eine zu einem ersten Regelkreis I gehörende Regeleinheit 11 vorgesehen, die mit einem Signal beaufschlagt ist, welches zum ermittelten Druck p₁ zwischen Zuführvorrichtung 1 und Filterelement 2 proportional ist. Des weiteren ist ein Ausgangssignal der Regeleinheit 11 der Zuführvorrichtung 1 beaufschlagt, wobei der Wert des Ausgangssignals zur einzustellenden Drehzahl n_{E} der Zuführvorrichtung 1 proportional ist.

Darüber hinaus ist eine zweite, zu einem zweiten Regelkreis II gehörende Regeleinheit 12 vorgesehen, welcher ein Signal beaufschlagt ist, das zum ermittelten Druck p₂ zwischen Filterelement 2 und Fördervorrichtung 3 proportional ist. Ein Ausgangssignal der Regeleinheit 12 ist der Fördervorrichtung 3 zugeführt, wobei der Wert des Ausgangssignals zur einzustellenden Drehzahl nₚ der Fördervorrichtung 3 proportional ist.

In einer bevorzugten Ausführungsform ist die Regeleinheit 12 - wie in Fig. 3 dargestellt - zudem mit dem Filterelement 2 verbunden. In diesem Fall ist vorgesehen, das Filterelement 2 als Filterwechsler auszugestalten, der entweder manuell und/oder automatisch steuerbar ist. Entsprechende Kriterien, die für eine automatische Steuerung des Filterwechslers angewendet werden, werden nachfolgend erläutert.

Das erfindungsgemässe Verfahren zur Steuerung des Extrusionssystems gemäss Fig. 3 wird anhand von Fig. 4, in der wiederum der Druckverlauf in Funktion des Ortes dargestellt ist, erläutert:

Die Betriebsparameter der Zuführvorrichtung 1 werden zunächst derart eingestellt, dass das Fördermedium am Ausgang der Zuführvorrichtung 1 einen konstanten Druck p₁ aufweist. Hierzu ist vorgesehen, die Drehzahl n_{E} mit Hilfe eines ersten Regelkreises I, im wesentlichen bestehend aus der ersten Regeleinheit 12, konstant zu halten. Damit können Druckschwankungen aufgrund von Änderungen der Materialeigenschaften oder aufgrund von Temperaturänderungen kompensiert werden. Ein genaues Einstellen und Stabilhalten des gewünschten Druckes p₁ ist insbesondere deshalb erwünscht, weil dies zu einer konstanten Rückstaulänge im Extruder und damit zu gleichbleibenden Verfahrensbedingungen und damit gleichbleibender Produktqualität führen soll.

Bei konstantem Durchsatz und gleichzeitig zunehmender Verschmutzung des Filterelementes 2, resultierend im erhöhten Druckabfall über dem Filterelement 2 in Folge der Verschmutzung, senkt sich der Druck p₂ nach dem Filterelement 2.

Die Druckabsenkung kann nur bis zu einem Minimaldruck p₂ₘᵢₙ erfolgen, bei dem das vollständige Füllen der Zahnlücken einer Zahnradpumpe, falls eine solche als Fördervorrichtung 3 eingesetzt wird, möglich ist. Andernfalls kann der geforderte Durchsatz an Fördermedium nicht mehr gehalten werden. Mit anderen Worten kann mit dem erfindungsgemässen Verfahren ein maximaler Druckabfall von Δp_{Fmax} über dem Filterelement 2 kompensiert werden.

Der sich - bei konstantem Gesamtdurchsatz - automatisch absenkende Pumpeneinlaufdruck bewirkt nun eine sich ändernde Leckstromsituation über die Fördervorrichtung 3. Erfindungsgemäss wird dieser Effekt mit Hilfe des zweiten Regelkreises II kompensiert, der die Drehzahl nₚ der Fördervorrichtung 3 in Abhängigkeit eines Druckabfalls Δp vor der Fördervorrichtung 3 einstellt, wobei sich der Drehzahlwert aus einer Kennlinie des jeweiligen Betriebspunktes der verwendeten Fördervorrichtung 3 - entsprechend einem gewünschten Durchsatz - ergibt.

In einer bevorzugten Ausführungsform der Erfindung wird der Druck p₂ mit einem Drucksensor am Ort s₂ (in Fig. 4 nicht dargestellt) überwacht. Der gemessene Druckwert wird der zweiten Regeleinheit 12 beaufschlagt, in der bei Bedarf entsprechende Aktionen ausgelöst werden. So ist vorgesehen, dass bei einer bevorzugten Ausführungsform des erfindungsgemässen Extrusionssystems das Filterelement 2 mit einem automatischen Filterwechsler ausgestattet ist, der von der zweiten Regeleinheit 12 angesteuert wird, und zwar insbesondere dann, wenn der Druck p₂ den minimal zulässigen Druck p₂ₘᵢₙ erreicht. Der verschmutzte Filter wird im Filterelement 2 ausgewechselt, wobei dies erforderlichenfalls gleichzeitig auf einer Anzeigeeinheit (in Fig. 4 nicht dargestellt) angezeigt wird.

Denkbar ist auch, dass die Notwendigkeit zum Auswechseln des Filters im Filterelement 2 angezeigt wird, das Auswechseln selbst manuell vorgenommen wird. Bei dieser Ausführungsform entfällt die Signalverbindung zwischen Regeleinheit 12 und Filterelement 2.

Fig. 5 zeigt das erfindungsgemässe Extrusionssystem gemäss Fig. 3, jedoch nunmehr mit einer einzigen Regeleinheit 13, in der sowohl die erste als auch die zweite Regeleinheit 11 bzw. 12 enthalten sind. Funktionell gesehen ergeben sich in einer Ausführungsform keine Unterschiede zur Ausführungsform gemäss Fig. 3.

Denkbar ist jedoch auch, dass die beiden Regelkreise I und II miteinander verknüpft sind, d.h., dass sich Parameteränderungen im einen Regelkreis auf den anderen auswirken und umgekehrt.

## Patentansprüche

1. Verfahren zum Konstanthalten eines Fördermedium-Durchsatzes (Qₚ) am Ausgang eines Extrusionssystems, bestehend aus einer Zufördervorrichtung (1), einem Filterelement (2) und einer Fördervorrichtung (3), welche eine Drehzahl-abhängige Förderkennlinie aufweist, wobei in Förderrichtung gesehen die Zuführvorrichtung (1), das Filterelement (2) und die Fördervorrichtung (3) hintereinander geschaltet sind, **dadurch gekennzeichnet,**
- **dass** eine Drehzahl (n_{E}) der Zufördervorrichtung (1) derart eingestellt wird, dass ein Filtereinlaufdruck (p₁) konstant bleibt, und
- **dass** eine Druckreduktion am Eingang der Fördervorrichtung (3) durch eine Erhöhung der Drehzahl (nₚ) der Fördervorrichtung (3) kompensiert wird.

2. Verfahren nach Anspruch 1, **dadurch gekennzeichnet, dass** Betriebsparameter (n_{E}, p₁), insbesondere die Drehzahl (n_{E}) der Zufördervorrichtung (1) und der Filtereinlaufdruck (p₁), zwischen vorab definierten oberen und unteren Grenzwerten eingestellt werden.

3. Verfahren nach Anspruch 1 oder 2, **dadurch gekennzeichnet, dass** bei Erreichen eines vorab definierten Minimaldrucks (p₂ₘᵢₙ) vor der Fördervorrichtung (3) ein im Filterelement (2) enthaltenes Filter automatisch ausgetauscht wird.

4. Verfahren nach Anspruch 1 oder 2, **dadurch gekennzeichnet, dass** bei Erreichen oder Unterschreiten eines vorab definierten Minimaldrucks (p₂ₘᵢₙ) vor der Fördervorrichtung (3) eine Anzeige aktiviert wird.

5. Verfahren nach einem der vorangehenden Ansprüche, **dadurch gekennzeichnet, dass** eine Änderung der Drehzahl (n_{E}) der Fördervorrichtung (3) zum Konstanthalten des Fördermedium-Durchsatzes (Qₚ) gemäss einer vorab bestimmten Kennlinie der Fördervorrichtung (3) vorgenommen wird.

6. Vorrichtung, insbesondere zur Durchführung des Verfahrens nach einem der Ansprüche 1 bis 5, mit einem Extrusionssystem, bestehend, in Förderrichtung gesehen, aus einer Zuführvorrichtung (1), einem Filterelement (2), einer Fördervorrichtung (3) und mindestens einer Regeleinheit (11, 12, 13), wobei ein mit einer Druckmesseinheit am Ausgang der Zuführvorrichtung (1) gemessener Druck (p₁) der Regeleinheit (11, 13) beaufschlagt ist, deren Ausgang mit einer Antriebseinheit der Zufördervorrichtung (1) verbunden ist, und wobei ein mit einer weiteren Druckmesseinheit am Eingang der Fördervorrichtung (3) gemessener Druck (p₂) der Regeleinheit (12, 13) beaufschlagt ist, deren Ausgang mit der Antriebseinheit der Fördervorrichtung (3) verbunden ist.

7. Vorrichtung nach Anspruch 6, **dadurch gekennzeichnet, dass** ein erster und ein zweiter Regelkreis vorgesehen sind, wobei der erste eine erste Regeleinheit (11) zur Regelung der Drehzahl (n_{E}) der Antriebseinheit der Zuführvorrichtung (1) und der zweite eine zweite Regeleinheit (12) zur Regelung der Drehzahl (nₚ) der Antriebseinheit der Fördervorrichtung (3) aufweist.

8. Vorrichtung nach Anspruch 6, **dadurch gekennzeichnet, dass** lediglich eine einzige Regeleinheit (13) vorhanden ist, die sowohl zur Regelung der Drehzahl (n_{E}) der Antriebseinheit der Zuführvorrichtung (1) als auch zur Regelung der Drehzahl (nₚ) der Antriebseinheit der Fördervorrichtung (3) vorgesehen ist.

9. Vorrichtung nach einem der Ansprüche 6 bis 8, **dadurch gekennzeichnet, dass** die Fördervorrichtung (3) eine Zahnradpumpe ist.

10. Vorrichtung nach einem der Ansprüche 6 bis 9, **dadurch gekennzeichnet, dass** die Zuführvorrichtung (1) ein Schneckenextruder oder eine aus zwei Walzen bestehende Einzugsvorrichtung ist.

11. Vorrichtung nach einem der Ansprüche 6 bis 10, **dadurch gekennzeichnet, dass** das Filterelement (2) aus einem automatisch betätigbaren Filterwechsler besteht, wobei vorzugsweise eine mit dem Filterwechsler verbundene Anzeige vorgesehen ist.

## Claims

1. Method for keeping a flow medium throughput (Qₚ) at the output of an extrusion system constant, the extrusion system consisting of a feed conveyer (1), a filter element (2) and a conveying device (3) having a rotational speed dependent conveying characteristic curve, the feed conveyer (1), the filter element (2) and the conveying device (3) being arranged one after another in conveying direction, **characterized in**
- **that** a rotational speed (n_{E}) of the feed conveyer (1) is set such that a filter inlet pressure (p₁) remains constant, and
- **that** a pressure reduction at the input of the conveying device (3) is compensated by an increase of the rotational speed (n_{P}) of the conveying device (3).

2. Method according to claim 1, **characterized in that** operational parameters (n_{E}, p₁), in particular the rotational speed (n_{E}) of the feed conveyer (1) and the filter inlet pressure (p₁), are set between predefined upper and lower limit values.

3. Method according to claim 1 or 2, **characterized in that** upon achieving a predefined minimum pressure (p₂ₘᵢₙ) in front of the conveying device (3), a filter, contained in the filter element (2), is automatically exchanged.

4. Method according to claim 1 or 2, **characterized in that** upon achieving or falling below a predefined minimum pressure (p₂ₘᵢₙ) in front of the conveying device (3), a display is activated.

5. Method according to one of the preceding claims, **characterized in that** a change of the rotational speed (n_{E}) of the conveying device (3) according to a predetermined characteristic curve of the conveying device (3) is performed for keeping the flow medium throughput (Qₚ) constant.

6. Device, in particular for performing the method according to one of the claims 1 to 5, having a an extrusion system consisting, as viewed in conveying direction, of a feed conveyer (1), a filter element (2) a conveying device (3) and at least one control unit (11, 12, 13), a pressure (p₁), measured by a pressure measurement unit at the output of the feed conveyer (1), being impinged on the control unit (11, 13) whose output is connected to the drive unit of the feed conveyer (1) and a pressure (p₂), measured at the input of the feed conveyer (1) by a further pressure measurement unit, being impinged on the control unit (12, 13) whose output is connected to the drive unit of the conveying device (3)

7. Device according to claim 6, **characterized in that** a first and a second control loop are provided, the first having a first control unit (11) for controlling the rotational speed (n_{E}) of the drive unit of the feed conveyer (1) and the second having a second control unit (12) for controlling the rotational speed (n_{P}) of the conveying device (3).

8. Device according to claim 6, **characterized in that** only one single control unit (13) is present, which is provided for both controlling the rotational speed (n_{E}) of the drive unit of the feed conveyer (1) and controlling the rotational speed (n_{P}) of the drive unit of the conveying device (3).

9. Device according to one of the claims 6 to 8, **characterized in that** the conveying device (3) is a gear pump.

10. Device according to one of the claims 6 to 9, **characterized in that** the feed conveyer (1) is a screw extruder or a draw-in device consisting of two rollers.

11. Device according to one of the claims 6 to 10, **characterized in that** the filter element (2) consists of an automatically actuatable filter changer, preferably a display connected to the filter changer being provided.

## Revendications

1. Procédé pour maintenir constant le volume de passage d'un milieu (Q_{P}) à la sortie d'un système d'extrusion comprenant un dispositif d'amené (1), un élément filtre (2) et un dispositif transporteur (3), ce dernier ayant une ligne caractéristique fonction de la vitesse de rotation, ledit dispositif d'amené (1), l'élément filtre (2) et le dispositif transporteur, regardés en direction de la direction d'avance du milieu, étant arrangés l'un derrière l'autre, **caractérisé**
- **en ce qu'**une vitesse de rotation (n_{E}) du dispositif d'amené (1) est réglée de telle manière qu'une pression d'entrée au filtre (P₁) reste constante et
- **en ce qu'**une réduction de la pression à l'entrée du dispositif transporteur (3) est compensée par une augmentation de la vitesse de rotation (n_{P}) du dispositif transporteur (3).

2. Procédé selon la revendication 1, **caractérisé en ce que** des paramètres d'opération (n_{E}, P₁), notamment la vitesse de rotation (n_{E}) du dispositif d'amené (1) et la pression d'entrée au filtre (P₁) sont réglés pour se trouver entre des valeurs limites supérieures et inférieures définies au préalable.

3. Procédé selon la revendication 1 ou 2, **caractérisé en ce que** lorsqu'une pression minimum définie au préalable (P₂ₘᵢₙ) est atteinte en amont du dispositif transporteur (3) un filtre contenu dans l'élément filtre (2) est automatiquement échangé.

4. Procédé selon la revendication 1 ou 2, **caractérisé en ce que** lorsqu'une pression minimum (P₂ₘᵢₙ) définie au préalable est atteinte ou tombe sous cette valeur en amont du dispositif transporteur (3) un dispositif de visualisation est activé.

5. Procédé selon l'une des revendications précédentes, **caractérisé en ce que** l'on procède à un changement de la vitesse de rotation (n_{E}) du dispositif transporteur (3) pour maintenir constant le volume de passage du milieu à transporter (Q_{P}) selon une ligne caractéristique définie au préalable du dispositif transporteur (3).

6. Dispositif, notamment pour la mise en oeuvre du procédé selon l'une des revendications 1 à 5, avec un système d'extrusion comprenant, vu en direction de la direction d'avance du milieu à transporter, un dispositif d'amené (1), un élément filtre (2), un dispositif transporteur (3) et au moins une unité de réglage (11, 12, 13), une pression (P₁), mesurée au moyen d'une unité de mesure de pression à la sortie du dispositif d'amené (1), étant amenée à l'unité de réglage (11, 13), dont la sortie est connectée avec une unité d'entraînement du dispositif d'amené (1) et une pression (P₂) mesurée au moyen d'une autre unité de mesure de pression à l'entrée du dispositif transporteur (3), étant amenée à l'unité de réglage (12, 13), dont la sortie est connectée avec l'unité d'entraînement du dispositif transporteur (3).

7. Dispositif selon la revendication 6, **caractérisé par** un premier et un second circuit de réglage, le premier comprenant une première unité de réglage (11) pour régler la vitesse de rotation (n_{E}) de l'unité d'entraînement du dispositif d'amené (1) et le second comprenant une seconde unité de réglage (12) pour régler la vitesse de rotation (n_{P}) de l'unité d'entraînement du dispositif transporteur (3).

8. Dispositif selon la revendication 6, **caractérisé par** une unité de réglage unique (13) qui règle la vitesse de rotation (n_{E}) de l'unité d'entraînement du dispositif d'amené (1) et la vitesse de rotation (n_{P}) de l'unité d'entraînement du dispositif transporteur (3).

9. Dispositif selon l'une des revendications 6 à 8, **caractérisé en ce que** le dispositif transporteur (3) est une pompe à engrenages.

10. Dispositif selon l'une des revendications 6 à 9, **caractérisé en ce que** le dispositif d'amené (1) est une extrudeuse à vis ou un dispositif d'alimentation comprenant deux cylindres.

11. Dispositif selon l'une des revendications 6 à 10, **caractérisé en ce que** l'élément filtre (2) comprend un échancheur de filtre opérable automatiquement, un dispositif de visualisation étant de préférence connecté avec l'échancheur de filtre.
